# EUROPEAN PATENT APPLICATION

(11) **EP 4 749 119 A1**
(43) Date of publication of application: **27.05.2026**
(21) Application number: 24383268.0
(22) Date of filing: 22.11.2024
(51) Int. Cl.: F03D 7/02, F03D 17/00

(54) **METHODS AND SYSTEMS FOR FIRE MITIGATION IN A WIND TURBINE**

(71) Applicant: GE VERNOVA RENOVABLES ESPAÑA, S.L., 08005 Barcelona (ES)
(72) Inventor: HOFFMANN, Till, 48499 Salzbergen (DE); ROMAN MALLADA, Jose Luis, 08005 Barcelona (ES)
(74) Representative: Bardehle Pagenberg S.L.

(57) **Abstract**

The present disclosure relates to methods (100, 200) for operating a wind turbine (10). The wind turbine (10) comprises a rotor (18) including a plurality of blades (22). A rotor disk (181) is defined by an area swept by the blades (22). The wind turbine (10) comprises a nacelle (16), a tower (15), and a yaw system (56). The methods (100, 200) comprise detecting or predicting a fire in a first blade (22f) and adjusting an azimuth angle of the rotor (18) such that the first blade (22f) is positioned in an upper half of the rotor disk (181). Furthermore, the methods (100, 200) comprise yawing the nacelle (16) away from an incoming wind direction (28) to an angle of more than 90 degrees and less 270 degrees. The present disclosure also relates to a control unit (96) configured for implementing such methods (100, 200) and to a wind turbine (10) comprising such control unit (96).

## Description

The present disclosure relates to methods for operating a wind turbine. In particular, it relates to methods for operating a wind turbine such that the damaging effects of fires are mitigated. More specifically, the present disclosure relates to methods for protecting a nacelle. Furthermore, control units and wind turbines implementing such methods are also disclosed.

### BACKGROUND

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly ("directly driven" or "gearless") or through the use of a gearbox. This way, the generator produces electricity which can be supplied to the electrical grid.

The wind turbine hub may be rotatably coupled to a front of the nacelle. The wind turbine hub may be connected to a rotor shaft, and the rotor shaft may then be rotatably mounted in the nacelle using one or more rotor shaft bearings arranged in a frame inside the nacelle. The nacelle is a housing arranged on top of a wind turbine tower that may contain and protect the gearbox (if present) and the generator (if not placed outside the nacelle) and, depending on the wind turbine, further components such as a power converter, and auxiliary systems. The nacelle typically comprises a cover to define an interior volume of the nacelle. Nacelle covers generally comprise composite materials, such as glass fiber reinforced composites.

Fires are a serious hazard for wind turbines as they can severely damage equipment, thus leading to significant economic losses. Furthermore, repair operations can be very time consuming, thus leading to further economic losses due to prolonged downtime of the affected wind turbine. Apart from economic losses, fires also pose a serious safety risk for operators potentially working in the area of the wind turbine. Moreover, environmental considerations are also relevant. Specifically, certain components, such as gearboxes or transformers, which are typically arranged within the nacelle, may contain lubricants or other elements which, upon a fire event, may leak and contaminate the surroundings of the wind turbine.

Different causes can lead to the appearance of a fire in a wind turbine. As an example, electrical short circuits or other malfunctioning of electrical equipment can result in the ignition of a fire due to, e.g. overheating. Wind turbine blades may be particularly prone to fires. In particular, although blades are equipped with protection systems against lightning strikes, these may not be enough in certain circumstances in which a lightning impact may lead to the ignition of a fire. Furthermore, other electrical systems may be present in wind turbine blades, such as electrical resistances used in ice mitigations systems. In such cases, a malfunction of the electrical ice mitigation system can also lead to overheating and, eventually, to the ignition of a fire in the wind turbine blade.

Moreover, a fire ignited in a blade may not necessarily remain constrained in the burning blade. Unfortunately, fire can spread relatively easily and rapidly to other components of the wind turbine, such as the rotor hub or the nacelle. In particular, the spread of a fire to the nacelle exhibits particularly damaging consequences due to the elevated cost and criticality of the components arranged inside the nacelle. Indeed, nacelle fires can fundamentally lead to total wind turbine losses.

Depending on operating and environmental conditions, the spread of fire may be enhanced by loose burning parts. As an example, burning blade parts from an ignited blade may fall on a nacelle cover, thus setting the nacelle on fire. Significantly increased losses arise from such accidents because the negative impact of a blade fire is maximized when extending to the nacelle.

Fire mitigation systems have been employed to mitigate the risk of fires or, at least, to mitigate the consequences of such fires. Existing fire mitigation systems aim at an early and automatic fire detection, as well as to a fast and automatic fire suppression. In general, such systems comprise fire detectors and aerosol suppression systems. Other fire mitigation systems or strategies comprise the use of advanced fire-resistant materials for the covers, e.g. the nacelle cover, and/or the use of non-combustible lubricating oils.

Nevertheless, such systems exhibit some limitations. In particular, they tend to operate in a reactive manner, i.e. only after a fire is detected in a particular area of the wind turbine, does a fire suppression mechanism appear. Besides, the effectiveness of the systems is highly dependent on the nature and location of the fire. Furthermore, such systems exhibit a limited capability to prevent the spread of fire between different components of the wind turbine. Specifically, in an attempt to mitigate the most serious consequences of a fire, the fire suppression systems may be provided in the nacelle of the wind turbine, where the most critical components are housed. However, such systems may not effectively prevent the spread of fire ignited in other components, e.g. in the wind turbine blades, into such nacelle.

The present disclosure aims to provide improved methods for operating a wind turbine so as to at least partially reduce the above mentioned limitations. Such improved methods allow reducing the economic and environmental impact of fires in wind turbines. In particular, the present disclosure aims to improve protection of the nacelle of the wind turbine, specifically in cases wherein a burning wind turbine blade already exists.

### SUMMARY

In an aspect of the present disclosure, a method for operating a wind turbine is provided. The wind turbine comprises a rotor including a plurality of blades. The rotor is configured for rotating about a rotor axis, and a rotor disk is defined by a circular area swept by the blades. The wind turbine also comprises a nacelle, a tower, and a yaw system for yawing the nacelle and the rotor about a longitudinal axis of the tower. The method comprises detecting or predicting a fire in a first blade of the plurality of blades. Furthermore, the method comprises adjusting an azimuth angle of the rotor about the rotor axis such that the first blade is positioned in an upper half of the rotor disk. The method also comprises yawing the nacelle and the rotor away from an incoming wind direction to a yaw angle that is more than ninety degrees, 90°, and less than two hundred and seventy degrees, 270°.

According to this aspect of the disclosure, the damaging consequences of a fire existing in a first wind turbine blade are constrained. On the one hand, by positioning the first blade, i.e. the already burning blade or the blade for which a fire is predicted, in an upper half of the rotor disk, the risk of spreading of the fire to other components of the wind turbine is mitigated. Hence, fire can spread according to different mechanisms: convection, conduction, and radiation. Particularly, convection can lead to the spread of a fire as the heat generated by a fire rises. In that sense, by positioning the first blade at an elevated position, i.e. in an upper half of the rotor disk, the risk of setting other components of the wind turbine on fire is reduced as such other components are mostly arranged at a lower position.

In an example, the rotor may not only be positioned in an upper half of the rotor disk, but it may also be fixed in that position. Accordingly, a more stable maneuver may be carried out without any undesired rotation of the rotor during yawing.

On the other hand, the orientation of the nacelle and the rotor with respect to the incoming wind direction is also adjusted such that the potential risks of spreading the fire from the first wind turbine blade to other wind turbine components is mitigated.

As known to those skilled in the art, the yaw system is typically controlled to align a horizontal axis of the wind turbine with the wind direction. Specifically, the yaw system is used to rotate the rotor and the nacelle of the wind turbine with respect to the tower, such that the rotor is facing the incoming wind, i.e. the rotor is in an upwind position. Accordingly, in standard operation, the nacelle is positioned in a downwind position with respect to the rotor, and particularly, with respect to the first blade. In other words, the nacelle is positioned at a rear position or behind the rotor when taking into account the wind direction as a reference and the rotor is upwind. For this reason, burning blade parts of the first blade, which can become loose as a result of the fire, have a significant likelihood of falling on a roof of the nacelle. This likelihood is further increased by the direction of the wind, which favors the ejection of such loose parts towards a downwind position with respect to the rotor. Furthermore, the risk is further exacerbated by the loss in a static moment resulting from a burning blade. Hence, due to a loss of weight of the burning blade, an imbalance will arise in the rotor, which will result in the first blade being naturally positioned at 12 o'clock, i.e. in a vertical position in the upper half of the rotor disk. Consequently, the likelihood of a burning part falling to the nacelle cover is further increased.

On the contrary, according to this aspect of the disclosure, the rotor and the nacelle are rotated with respect to the tower such that the first blade can be arranged in a position that is downwind of the nacelle. Or, at least, in a position that is less upwind than in the standard configuration, in which the first blade is substantially in a perfect upwind arrangement. In other words, by turning the rotor and nacelle by more than ninety degrees, 90°, but less than two hundred seventy degrees, the first blade can be arranged in a position that is behind or downstream of the nacelle when taking the wind direction as a reference. Accordingly, burning blade parts becoming loose from the blade are less likely to fall on a roof of the nacelle. This is due to both the relative orientation of the first blade and the nacelle, and to the wind force which, in this case, favors the ejection of such loose parts in a trajectory away from the nacelle.

Hence, according to this first aspect of the disclosure, the risk of the nacelle being affected by a fire in a blade is minimized. Such a minimization is achieved by combining the concept of positioning a burning blade at an upper position, with the concept of rotating the nacelle such that the burning blade is not upwind of the nacelle. Accordingly, the fire can be contained in the corresponding first blade and the consequences of a blade fire can be constrained or controlled.

In another aspect of the present disclosure, a control unit for a wind turbine is provided. The wind turbine comprises a rotor including a plurality of blades. The rotor is configured for rotating about a rotor axis, and a rotor disk is defined by a circular area swept by the blades. The wind turbine also comprises a nacelle, a tower, and a yaw system for yawing the nacelle and the rotor about a longitudinal axis of the tower. The control unit is configured for determining or predicting an occurrence of a fire in the first blade based on the received signal. Besides, the control unit is configured for sending instructions to one or more actuators of the wind turbine to adjust an azimuth angle of the rotor about the rotor axis. Hence, the first blade is positioned in an upper half of the rotor. The control unit is further configured for sending instructions to the yaw system to yaw the rotor away from an incoming wind direction to a yaw angle of more than ninety degrees, 90°, and less than two hundred and seventy degrees, 270°.

According to this another aspect of the disclosure, a control unit capable of minimizing the risk of a catastrophic fire in a wind turbine is provided. Hence, the control unit is configured to implement a method according to the first aspect of the present disclosure, Consequently, the control unit can operate the wind turbine in such a manner that a fire, either already existing or predicted, in one of the wind turbine blades has a reduced probability of spreading to a wind turbine nacelle. Accordingly, the damage induced by the fire can be contained in the first blade and the components of the nacelle can remain substantially unaffected.

In an example, the control unit may be further configured for sending instructions to a fixing system of the wind turbine to fix the rotor. Accordingly, the control unit may facilitate a more robust and stable operation, particularly during yawing of the nacelle, by preventing undesired movements of the rotor. Such examples may be particularly advantageous in cases comprising a balanced rotor, i.e. a rotor in which the three blades have substantially the same weight, or in cases comprising a rotor in an equilibrium position, i.e. a rotor in which a burning blade, with reduced weight, is arranged vertically and pointing upwards. Hence, conventional fixing systems, e.g. locking systems, which are commonly dimensioned to lock a balanced rotor, may also be used to fix the rotor in a method according to this example of the disclosure.

In still another aspect of the present disclosure, a wind turbine is provided. The wind turbine comprises a control unit according to the previous aspect of the disclosure. Furthermore, the wind turbine comprises one or more sensors. The sensors are configured for detecting a condition of the first blade, and for generating a signal indicative of the condition. The condition is indicative of a fire.

According to this further aspect of the disclosure, a wind turbine with improved capabilities, and more particularly, with improved response to fire is provided. In particular, by arranging sensors especially configured for detecting a conditions indicative of a fire, an effective monitoring of the conditions of the first blade can be carried out. Accordingly, the method according to the first aspect of the present disclosure can be implemented, and the wind turbine can benefit from an enhanced response to either existing or predicted fires in the blades.

Specifically, by containing the damage in a certain blade, complete wind turbine losses are avoided. As a result, both direct costs associated to the replacement of damaged equipment, and costs associated to the downtime needed for the repair actions can be significantly reduced.

Throughout this disclosure, a rotor disk is understood as the circular area swept by the rotor blades as they spin. The rotor disk represents the cross-sectional area where the wind flows through the rotor. Accordingly, an upper half of the rotor disk is interpreted as the upper semi-circular area of the rotor disk, i.e. as the semi-circular area that lies above a horizontal plane containing the rotor axis.

Due to the circular geometry of the rotor disk, an analogy with a clock is commonly used to specify the angular position of the blades. Specifically, an azimuth angle is typically defined with an origin, i.e. zero degrees, 0°, corresponding a position in a vertical axis and pointing upwards. Following the analogy with a clock, such a position is commonly referred to as a 12 o'clock position. Therefore, a blade pointing vertically upwards in the rotor disk is associated with a 12 o'clock position, whereas a blade pointing vertically downwards, i.e. arranged in front of the tower, is associated with a 6 o'clock position. Similarly, a blade can obviously acquire two horizontal positions during a full rotation. Such horizontal positions are characterized as either 3 o'clock or 9 o'clock positions.

When taking the clock analogy into account, an upper half of the rotor disk corresponds to the two quadrants of the rotor disk covering the range form 9 o'clock to 12 o'clock, and from 12 o'clock to 3 o'clock.

Throughout this disclosure, a yaw angle is understood as an angle formed between a direction of an incoming wind and a horizontal axis of the wind turbine. In particular, a yaw angle of zero degrees, 0°, corresponds to a situation in which the wind direction and the horizontal axis of the wind turbine are aligned, and the rotor of the nacelle is facing the incoming wind. Such a situation would correspond to a perfect upwind orientation. On the contrary, a yaw angle of one hundred and eighty degrees, 180°, corresponds to the situation in which the wind direction and the horizontal axis of the wind turbine are aligned, but the rear part of the nacelle is the one facing the incoming wind. In this situation, the wind turbine would be in a perfect downwind orientation. In both mentioned cases, a rotor plane, i.e. a plane containing the rotor disk, is substantially perpendicular to the direction of the wind. On the other hand, yaw angles of ninety degrees, 90°, or two hundred and seventy degrees, 270°, correspond to a situation in which the rotor plane is substantially parallel to the wind direction.

### BRIEF DESCRIPTION OF THE DRAWINGS

Non-limiting examples of the present disclosure will be described in the following, with reference to the drawings, in which
Figure 1 illustrates a perspective view of one example of a wind turbine;
Figure 2 illustrates a simplified, internal view of one example of the nacelle of the wind turbine of the Figure 1;
Figure 3 schematically illustrates a front view of a wind turbine showing the rotor disk;
Figure 4 shows a flowchart of an example of a method for operating a wind turbine;
Figures 5A - 5B schematically illustrates a side view (Fig. 5A) and top view (Fig. 5B) of a wind turbine arranged based on a method according to an example;
Figures 6 schematically illustrates a side view of a wind turbine comprisign wind turbine blades with pre-bending, the wind turbine arranged based on a method according to an example;
Figure 7 shows a flowchart of another example of a method for operating a wind turbine;
Figure 8 schematically illustrates a front view of a wind turbine with a burning blade, the wind turbine being arranged based on a method according to an example;
Figure 9 schematically illustrates a control unit for a wind turbine according to an example; and
Figures 10A - 10B schematically illustrates a side view (Fig. 10A) and top view (Fig. 10B) of a wind turbine arranged based on a method of the prior art.

### DETAILED DESCRIPTION OF EXAMPLES

Reference now will be made in detail to embodiments of the present disclosure, one or more examples of which are illustrated in the drawings. Each example is provided by way of explanation only, not as a limitation. In fact, it will be apparent to those skilled in the art that various modifications and variations can be made in the present disclosure. For instance, features illustrated or described as part of one embodiment can be used with another embodiment to yield a still further embodiment. Thus, it is intended that the present disclosure covers such modifications and variations as come within the scope of the appended claims and their equivalents.

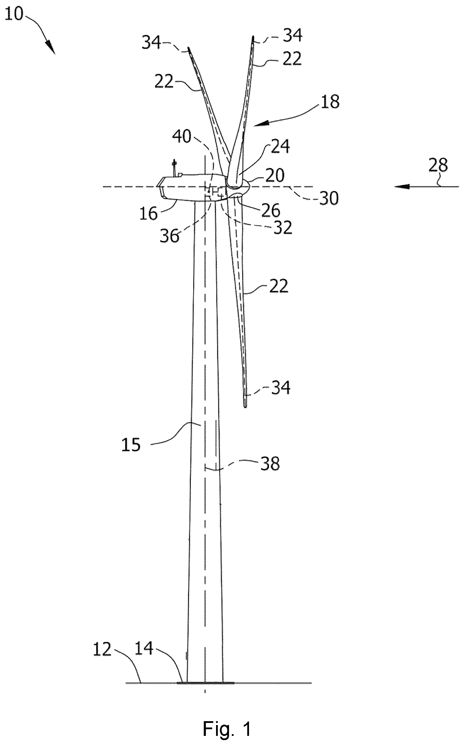

Figure 1 is a perspective view of an example of a wind turbine 10. In the example, the wind turbine 10 is a horizontal-axis wind turbine. Alternatively, the wind turbine 10 may be a vertical-axis wind turbine. In the example, the wind turbine 10 includes a tower 15 that extends from a support system 14 on a ground 12, a nacelle 16 mounted on tower 15, and a rotor 18 that is coupled to nacelle 16. The rotor 18 includes a rotatable hub 20 and at least one rotor blade 22 coupled to and extending outward from the hub 20. In the example, the rotor 18 has three rotor blades 22. In an alternative embodiment, the rotor 18 includes more or less than three rotor blades 22. The tower 15 may be fabricated from tubular steel to define a cavity (not shown in Figure 1) between a support system 14 and the nacelle 16. In an alternative embodiment, the tower 15 is any suitable type of a tower having any suitable height. According to an alternative, the tower can be a hybrid tower comprising a portion made of concrete and a tubular steel portion. Also, the tower can be a partial or full lattice tower.

The rotor blades 22 are spaced about the hub 20 to facilitate rotating the rotor 18 to enable kinetic energy to be transferred from the wind into usable mechanical energy, and subsequently, electrical energy. The rotor blades 22 are mated to the hub 20 by coupling a blade root region 24 to the hub 20 at a plurality of load transfer regions 26. The load transfer regions 26 may have a hub load transfer region and a blade load transfer region (both not shown in Figure 1). Loads induced to the rotor blades 22 are transferred to the hub 20 via the load transfer regions 26.

In examples, the rotor blades 22 may have a length ranging from about 15 meters (m) to about 90 m or more. Rotor blades 22 may have any suitable length that enables the wind turbine 10 to function as described herein. For example, non-limiting examples of blade lengths include 20 m or less, 37 m, 48.7 m, 50.2m, 52.2 m or a length that is greater than 91 m. As wind strikes the rotor blades 22 from a wind direction 28, the rotor 18 is rotated about a rotor axis 30. As the rotor blades 22 are rotated and subjected to centrifugal forces, the rotor blades 22 are also subjected to various forces and moments. As such, the rotor blades 22 may deflect and/or rotate from a neutral, or non-deflected, position to a deflected position.

Moreover, a pitch angle of the rotor blades 22, e.g. an angle that determines an orientation of the rotor blades 22 with respect to the wind direction, may be changed by a pitch system 32 to control the load and power generated by the wind turbine 10 by adjusting an angular position of at least one rotor blade 22 relative to wind vectors. Pitch axes 34 of rotor blades 22 are shown. During operation of the wind turbine 10, the pitch system 32 may particularly change a pitch angle of the rotor blades 22 such that the angle of attack of (portions of) the rotor blades are reduced, which facilitates reducing a rotational speed and/or facilitates a stall of the rotor 18.

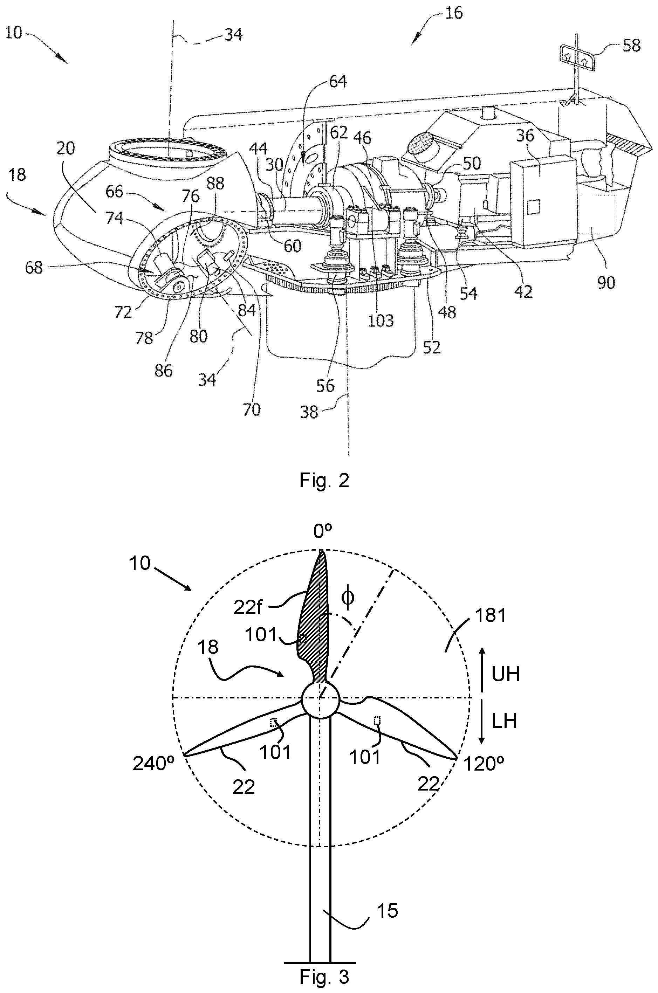

In the example, a blade pitch of each rotor blade 22 is controlled individually by a wind turbine controller 36 or by a pitch control system 80 (see Figure 2). Alternatively, the blade pitch for all rotor blades 22 may be controlled simultaneously by said control systems.

Further, in the example, as the wind direction 28 changes, a yaw direction of the nacelle 16 may be rotated about a yaw axis 38 to position the rotor blades 22 with respect to wind direction 28.

In the example, the wind turbine controller 36 is shown as being centralized within the nacelle 16, however, the wind turbine controller 36 may be a distributed control system throughout the wind turbine 10, on the support system 14, within a wind farm, and/or at a remote-control center. The wind turbine controller 36 may include one or more processors 40 configured to perform one or more of the steps of the methods described herein. Further, many of the other components described herein include one or more processors. The wind turbine controller 36 may also include a memory, e.g. one or more memory devices. As used herein, a memory may comprise memory element(s) including, but not limited to, a computer readable medium (e.g., random access memory (RAM)), a computer readable non-volatile medium (e.g., a flash memory), a floppy disk, a compact disc-read only memory (CD-ROM), a magnetooptical disk (MOD), a digital versatile disc (DVD) and/or other suitable memory elements.

Figure 2 is an enlarged sectional view of a portion of the wind turbine 10. In the example, the wind turbine 10 includes the nacelle 16 and the rotor 18 that is rotatably coupled to the nacelle 16. More specifically, the hub 20 of the rotor 18 is rotatably coupled to an generator 42 positioned within the nacelle 16 by the main shaft 44, a gearbox 46, a high speed shaft 48, and a coupling 50. In the example, the main shaft 44 is disposed at least partially coaxial to a longitudinal axis (not shown) of the nacelle 16. A rotation of the main shaft 44 drives the gearbox 46 that subsequently drives the high speed shaft 48 by translating the relatively slow rotational movement of the rotor 18 and of the main shaft 44 into a relatively fast rotational movement of the high speed shaft 48. The latter is connected to the generator 42 for generating electrical energy with the help of a coupling 50. Furthermore, a transformer 90 and/or suitable electronics, switches, and/or inverters may be arranged in the nacelle 16 in order to transform electrical energy generated by the generator 42 having a voltage between e.g. 400V to 1000 V into electrical energy having medium voltage (e.g. 10 - 35 kV). Offshore wind turbines may have for example generator voltages between 650 V and 3500 V, and transformer voltages may for instance be between 30 kV and 70 kV. Said electrical energy is conducted via power cables from the nacelle 16 into the tower 15.

The gearbox 46, generator 42 and transformer 90 may be supported by a main support structure frame of the nacelle 16, optionally embodied as a main frame 52. The gearbox 46 may include a gearbox housing that is connected to the main frame 52 by one or more torque arms 103. In the example, the nacelle 16 also includes a main forward support bearing 60 and a main aft support bearing 62. Furthermore, the generator 42 can be mounted to the main frame 52 by decoupling support means 54, in particular in order to prevent vibrations of the generator 42 to be introduced into the main frame 52 and thereby causing a noise emission source.

Optionally, the main frame 52 is configured to carry the entire load caused by the weight of the rotor 18 and components of the nacelle 16 and by the wind and rotational loads, and furthermore, to introduce these loads into the tower 15 of the wind turbine 10. The rotor shaft 44, generator 42, gearbox 46, high speed shaft 48, coupling 50, and any associated fastening, support, and/or securing device including, but not limited to, main frame 52, and forward support bearing 60 and aft support bearing 62, are sometimes referred to as a drive train 64.

In some examples, the wind turbine may be a direct drive wind turbine without gearbox 46. Generator 42 operates at the same rotational speed as the rotor 18 in direct drive wind turbines. They therefore generally have a much larger diameter than generators used in wind turbines having a gearbox 46 for providing a similar amount of power than a wind turbine with a gearbox.

The nacelle 16 may also include a yaw system 56 that may be used to rotate the nacelle 16 and thereby also the rotor 18 about the yaw axis 38 to control the perspective of the rotor blades 22 with respect to the wind direction 28.

For positioning the nacelle 16 appropriately with respect to the wind direction 28, the nacelle 16 may also include at least one meteorological measurement system which may include a wind vane and an anemometer. The meteorological measurement system 58 can provide information to the wind turbine controller 36 that may include wind direction 28 and/or wind speed.

In the example, the pitch system 32 (see Figure 1) is at least partially arranged as a pitch assembly 66 in the hub 20. The pitch assembly 66 includes one or more pitch drive systems 68 and at least one sensor 70. Each pitch drive system 68 is coupled to a respective rotor blade 22 (shown in figure 1) for modulating the pitch angle of a rotor blade 22 along the pitch axis 34. Only one of three pitch drive systems 68 is shown in figure 2.

In the example, the pitch assembly 66 includes at least one pitch bearing 72 coupled to hub 20 and to a respective rotor blade 22 (shown in figure 1) for rotating the respective rotor blade 22 about the pitch axis 34. The pitch drive system 68 includes a pitch drive motor 74, a pitch drive gearbox 76, and a pitch drive pinion 78. The pitch drive motor 74 is coupled to the pitch drive gearbox 76 such that the pitch drive motor 74 imparts mechanical force to the pitch drive gearbox 76. The pitch drive gearbox 76 is coupled to the pitch drive pinion 78 such that the pitch drive pinion 78 is rotated by the pitch drive gearbox 76. The pitch bearing 72 is coupled to pitch drive pinion 78 such that the rotation of the pitch drive pinion 78 causes a rotation of the pitch bearing 72.

Pitch drive system 68 is coupled to the wind turbine controller 36 for adjusting the pitch angle of a rotor blade 22 upon receipt of one or more signals from the wind turbine controller 36. In the example, the pitch drive motor 74 is any suitable motor driven by electrical power and/or a hydraulic system that enables pitch assembly 66 to function as described herein. Alternatively, the pitch assembly 66 may include any suitable structure, configuration, arrangement, and/or components such as, but not limited to, hydraulic cylinders, springs, and/or servomechanisms. In certain embodiments, the pitch drive motor 74 is driven by energy extracted from a rotational inertia of hub 20 and/or a stored energy source (not shown) that supplies energy to components of the wind turbine 10.

The pitch assembly 66 may also include one or more pitch control systems 80 for controlling the pitch drive system 68 according to control signals from the wind turbine controller 36, in case of specific prioritized situations and/or during rotor 18 overspeed. In the example, the pitch assembly 66 includes at least one pitch control system 80 communicatively coupled to a respective pitch drive system 68 for controlling pitch drive system 68 independently from the wind turbine controller 36. In the example, the pitch control system 80 is coupled to the pitch drive system 68 and to a sensor 70. During normal operation of the wind turbine 10, the wind turbine controller 36 may control the pitch drive system 68 to adjust a pitch angle of rotor blades 22.

According to an embodiment, a power generator 84, for example comprising a battery and electric capacitors, is arranged at or within the hub 20 and is coupled to the sensor 70, the pitch control system 80, and to the pitch drive system 68 to provide a source of power to these components. In the example, the power generator 84 provides a continuing source of power to the pitch assembly 66 during operation of the wind turbine 10. In an alternative embodiment, power source 84 provides power to the pitch assembly 66 only during an electrical power loss event of the wind turbine 10. The electrical power loss event may include power grid loss or dip, malfunctioning of an electrical system of the wind turbine 10, and/or failure of the wind turbine controller 36. During the electrical power loss event, the power generator 84 operates to provide electrical power to the pitch assembly 66 such that pitch assembly 66 can operate during the electrical power loss event.

In the example, the pitch drive system 68, the sensor 70, the pitch control system 80, cables, and the power source 84 are each positioned in a cavity 86 defined by an inner surface 88 of hub 20. In an alternative embodiment, said components are positioned with respect to an outer surface of hub 20 and may be coupled, directly or indirectly, to the outer surface.

As used herein, the term "processor" is not limited to integrated circuits referred to in the art as a computer, but broadly refers to a controller, a microcontroller, a microcomputer, a programmable logic controller (PLC), an application specific integrated circuit, and other programmable circuits, and these terms are used interchangeably herein.

Figure 3 schematically illustrates a front view of a wind turbine 10. The wind turbine 10 comprises a rotor 18 with three blades 22. In this example, a burning first blade 22f is also depicted. The burning first blade 22f may either be understood as a blade 22 in which a fire has already occurred, or a blade 22 for which the occurrence of a fire is predicted. As shown in Figure 3, a rotor disk 181 is defined by the rotor 18. Specifically, a rotor disk 181 is defined by the circular area swept by the blades 22. In order to refer to the angular position of the blades 22 upon rotation of the rotor 18, an azimuth angle, ϕ, is typically employed. A system of reference comprising both a vertical axis and a horizontal axis are used. According to the convention adopted in Figure 3, an azimuth angle of 0° corresponds to a direction in the vertical axis and pointing upwards. Accordingly, in the example shown, the burning first blade 22f is arranged in a position corresponding to an azimuth angle of 0°. Similarly, the other two blades 22 are arranged at 120° and 240°.

It is also common to refer to the position of the different blades 22 by using an analogy with a clock. Hence, a blade pointing vertically upwards, i.e. like the burning first blade 22f in Figure 3, is said to be in a 12 o'clock position. Consequently, the other two blades 22 in this scenario are arranged at 4 o'clock and 8 o'clock. Based on this analogy, a blade 22 arranged vertically, but pointing downwards, i.e. right in front of the tower, would be arranged in a 6 o'clock position. Finally, the horizontal axis of the system of reference does also define specific positions of the blades 22. On the one hand, a blade 22 arranged horizontally with an azimuth angle of 90° is said to be arranged at a 3 o'clock position. On the other hand, a blade 22 arranged, also horizontally, but with an azimuth angle of 270°, is said to be arranged at the 9 o'clock position.

Regarding the rotor disk 181, a split between an upper half UH and a lower half LF is also presented in Figure 3. As shown, the upper half UH of the rotor disk 181 corresponds to the semi-circular area of the rotor disk 181 that lies above a substantially horizontal plane containing the rotor axis 30 of the wind turbine 10. Accordingly, the upper half of the rotor disk 181 comprises the quadrants that range from 9 o'clock to 12 o'clock, and from 12 o'clock to 3 o'clock.

As also schematically depicted in Figure 3, one or more sensors 101 may be arranged and they may be configured for detecting a fire, or at least, for sensing a magnitude indicative of an existing or potential fire. In some examples, the sensors 101 may be arranged in the different blades 22. In other examples, the sensors 101 may be arranged in other locations such as at the hub 20 or at the nacelle 16.

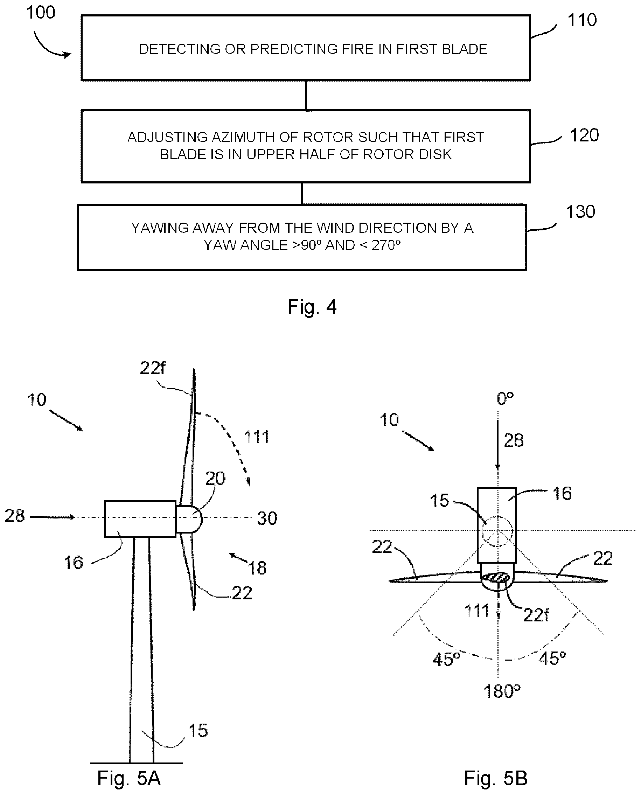

Figure 4 shows a flowchart of an example of a method 100 for operating a wind turbine 10. The method 100 is provided to prevent or mitigate the effects of a fire, either existing or predicted, in a first blade 22f. The wind turbine 10 comprises a rotor 18 including a plurality of blades 22. As already discussed with reference to Figure 3, the rotor 18 is configured for rotating about a rotor axis 30. A rotor disk 181 is defined by a circular area swept by the blades 22. The wind turbine 10 also comprises a nacelle 16, a tower 15, and a yaw system 56 for yawing the nacelle 16 and the rotor 18 about a longitudinal axis 38 of the tower 15. The method 100 comprises, in block 110, detecting or predicting a fire in a first blade 22f of the plurality of blades 22. Furthermore, block 120 of the method 100 comprises adjusting an azimuth angle, ϕ, of the rotor 18 about the rotor axis 30 such that the first blade 22f is positioned in an upper half UH of the rotor disk 181. The method also comprises, in block 130, yawing the nacelle 16 and the rotor 18 away from an incoming wind direction 28 to a yaw angle that is more than ninety degrees, 90°, and less than two hundred and seventy degrees, 270°.

According to the method 100 described with reference to Figure 4, the damaging consequences of a fire in a first blade 22f are constrained. In particular, the risk of a nacelle 16 of the wind turbine 10 being affected by the spread of a fire in the first blade 22f is reduced. Specifically, the risk of the nacelle 16 being affected by a fire in a first blade 22f is minimized by combining two concepts. On the one hand, a first blade 22f, i.e. a blade already burning or for which a risk of fire is predicted, is positioned at an upper position of the rotor disk 181. On the other hand, the nacelle 16 and the rotor 18 are rotated such that the first blade 22f is at least not perfectly upwind of the nacelle 16.

In an example, a further block, comprising fixing of the rotor 18, may be included. In this example, method 100 may result in a more stable operation, especially during the yawing in block 130.

The sequence shown in the flowchart of Figure 4 is not to be interpreted in a restricted manner. Hence, in some cases, the order of some of the blocks may be altered. For instance, in some cases, a fire may be detected or predicted, i.e. at block 110, while the position of the rotor 18 is already adjusted, i.e. block 120. This may be the case if a fire is detected or predicted while the wind turbine 10 is in a parked condition. Similarly, in some examples, the yawing of the nacelle 16 in block 130 may also be carried out while the azimuth angle ϕ of the rotor 18 is being adjusted. Moreover, in cases comprising fixing of the rotor 18, such fixation may be carried out either before, during, or after the yawing of the nacelle 16 and the rotor 18 in block 130.

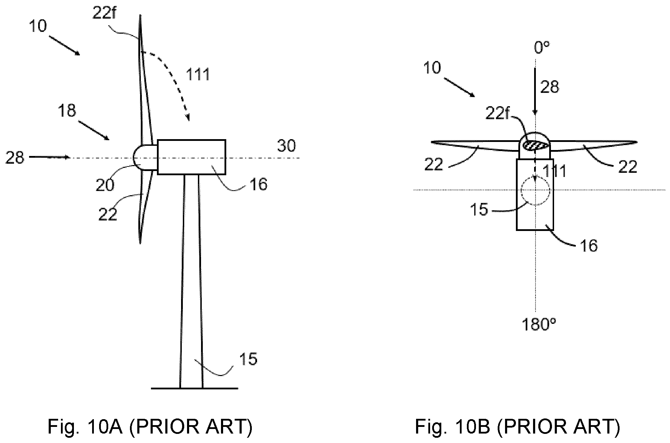

Figures 10A - 10B schematically illustrate a side view (Fig. 10A) and a top view (Fig. 10B) of a wind turbine 10 according to a method of the prior art. According to such prior art method, the yaw system 56 of the wind turbine 10 is operated so that the rotor 18 and the nacelle 16 are aligned with the wind direction 28, and the rotor 18 is facing the wind. In other words, the wind turbine 10 is arranged in an upwind configuration. Such upwind configuration is employed during regular operation so that maximum energy capture is achieved. Furthermore, such upwind arrangement is also commonly employed for load mitigation while the wind turbine 10 is in idling or in a parked condition.

Nevertheless, as shown in Figures 10A-10B, an increased risk of fire in a nacelle 16 may arise from such a prior art configuration in case a fire is ignited in a blade. In particular, when a first blade 22f is burning, certain burning parts may become loose. Such burning parts are likely to fall on the roof of the nacelle 16. In particular, as more clearly shown in Figure 10B, the nacelle 16 is arranged right behind the rotor 18. Besides, as shown in Figure 10A, the wind direction 28 favors a trajectory 111 that results in such burning parts, ejected from the first blade 22f, falling on the nacelle 16 cover. Consequently, such burning parts pose a high risk of igniting the fiber glass material of the nacelle 16 cover. Eventually, this chain of events can result in a complete burning of the nacelle 16 which, as previously mentioned, represents a catastrophic damage to the wind turbine 10.

The risk is exacerbated by the presence of a rotor 18 imbalance. In other words, the rotor 18 has a tendency to adopt an azimuth angle in which the burning first blade 22f is arranged at 12 o'clock. Indeed, a loss of static moment may arise from a reduced weight of the burning first blade 22f. Accordingly, the rotor 18 may turn until an equilibrium position is reached. In the equilibrium position, the lighter blade, i.e. the burning first blade 22f, may be pointing upwards. As schematically depicted in Figure 10A, such an arrangement is particularly hazardous due to the increased likelihood of setting the nacelle 16 on fire.

On the contrary, the method 100 described with reference to Figure 4, allows reducing the risk of such a chain of events. It is understood that, during normal operation conditions, i.e. when not in the presence of a fire risk, the method according to the present disclosure also comprises an upwind orientation. That is, in normal conditions, the rotor 18 of the wind turbine 10 is facing the wind. Nevertheless, in case a potential fire risk is detected, a different configuration is adopted. This is schematically illustrated in Figures 5A - 5B, which, in an equivalent manner to Figures 10A-10B, also illustrate a side view (Fig. 5A) and a top view (Fig. 5B) of a wind turbine 10. Nevertheless, in this case, the wind turbine 10 is controlled with a method 100 according to the present disclosure.

Hence, the burning first blade 22f is also arranged at an upper position of the rotor disk 181. In particular, in an example of the method 100, adjusting the azimuth angle of the rotor 18 may comprise adjusting the azimuth angle such that the first blade 22f is positioned in a vertical direction plus or minus forty five degrees, 45°.

By arranging the burning first blade 22f in an upper half UH of the rotor disk 181, at least two beneficial effects may be obtained.

On the one hand, it is known that heat tends to rise. Therefore, in case of a fire in the first blade 22f, such fire may predominantly spread in an upwards direction. Accordingly, by arranging the first blade 22f at an upper position, i.e. in the upper half UH of the rotor disk 181, the fire may tend to spread towards the tip of the first blade 22f, and not towards the hub 20, or towards the nacelle 16. In this manner, the risk of setting those components on fire may be reduced. It is noted that, if the first blade 22f were arranged in a lower half LH of the rotor disk 181, an increased risk may exist for the nacelle 16. Thus, a bottom part of the nacelle 16, i.e. a floor of the nacelle 16, may be set on fire due to rising heat and/or rising fire.

On the other hand, a more stable position may be obtained by providing the first blade 22f at an upper position. Hence, in case of an already existing fire in one of the blades 22, an imbalance may arise due to the loss of weight in the burning first blade 22f. In particular, the rotor 18 will have a tendency to rotate such that the burning first blade 22f, which is less heavy, is oriented in an upper part of the rotor 18.

This second beneficial effect may be particularly useful in examples comprising fixing of the rotor 18. Indeed, fixing of the rotor 18 may also be facilitated by arranging the first blade 22f in an upper half UH of the rotor disk 181. Different mechanisms may be employed to fix the position of the rotor 18. In any case, conventional fixing mechanisms are typically dimensioned to fix substantially balanced rotors 18, i.e. rotors 18 in which all blades 22 have substantially the same weight.

As an example, fixing mechanisms may comprise a locking mechanism comprising a locking pin, which is inserted in a receptable for locking. The locking pin is commonly arranged in a stationary part of the wind turbine 10, e.g. in the nacelle 18, whereas the receptable is arranged in a rotating part of the wind turbine 10, e.g. in the hub 20.

Other arrangements for such locking mechanisms may comprise arrangements in which the receptacle comprises a locking disk, which may be mounted on a shaft of the wind turbine 10. The locking disk can have a plurality of holes so that the wind turbine rotor 18 can be locked at different positions by inserting a locking pin in a desired hole.

In any case, the locking system and, more particularly, the locking pin, may be dimensioned to prevent undesired movements of a substantially balanced position, i.e. a rotor 18 wherein all the blades 22 exhibit substantially the same weight, or to prevent undesired movement of a rotor 18 in an equilibrium position, i.e. with a less heavy blade 22 like the burning first blade 22f, arranged substantially in a vertical direction and pointing upwards, i.e. at a 12 o'clock position.

In still other examples, the fixing system may not comprise a locking system but a braking system. Specifically, the fixing system may comprise a brake disk, which may be arranged, e.g. in a high speed shaft of a wind turbine. The fixing system may also comprise a brake, which may be configured for engagement with the brake disk. Such a fixing system may provide enough braking torque to fix the position of the rotor 18, especially in cases comprising a rotor 18 in equilibrium. As already described, such cases may occur when the burning first blade 22f, with a somewhat reduced weight, is oriented in a substantially vertical position, i.e. at 12 o'clock.

The adjustment of the rotor 18 may be carried out proactively, i.e. even before an imbalance actually exists. In other words, the rotor 18 may be arranged in a favorable position in anticipation of a potential loss of weight of the burning first blade 22f. This may be done at an early stage after a fire is detected, or even after a fire is only predicted. In such cases, no significant loss of weight may have occurred yet. However, in anticipation of such loss of weight, the rotor 18 may already be arranged with the first blade 22f pointing upwards. In examples comprising such an early detection, or even prediction, of a fire in the first blade 22f, fixing of the rotor 18 may become particularly advantageous. Indeed, in these cases, significant amounts of mass may not be shredded from the first blade 22f yet. Accordingly, fixing of the rotor 18 may be carried out with a conventional fixing system, i.e. a fixing system dimensioned to fix the position of a balanced rotor 18. Such fixing may facilitate the yawing maneuver while preventing undesired changes in the position of the first blade 22f.

More particularly, in a variant of this example, the first blade 22f may be positioned in a substantially vertical direction. Such an example is schematically illustrated in Figure 5A.

According to this example with a substantially vertical position, the previous favorable effects may be further enhanced. Hence, the tendency of the fire to extend upwards may be optimized by arranging the first blade 22f in a vertical orientation, such that the fire may rise towards the tip. Furthermore, the arrangement with the first blade 22f at the 12 o'clock position corresponds to the equilibrium position once the first blade 22f loses some weight due to the fire. Accordingly, in examples comprising fixing of the rotor 18, the operation of the fixing system may be further facilitated, and no oversizing or overloading of the same may be required, i.e. a conventional fixing system, such as a locking system with a locking pin, intended for operation with a substantially balanced rotor 18, may be employed. Moreover, this variant may be especially adequate when using a fixing system comprising a braking system, e.g. a braking disk engaging with a brake, as the required torque may be relatively low.

Furthermore, by yawing the nacelle 16 away from the wind direction 28, the likelihood of a burning part of the first blade 22f falling onto a roof of the nacelle 16 may be significantly reduced. Specifically, in an example, the method 100 may comprise yawing the nacelle 16 and the rotor 18 away from an incoming wind direction 28 by an angle in a range of one hundred and eighty degrees, 180°, plus or minus forty five degrees, 45°.

In this example, the rotor 18, and more particularly the burning first blade 22f, may be arranged downstream of the nacelle 16 with respect to the wind direction 28. Accordingly, the burning parts of the first blade 22f, which may become loose, may be propelled by the wind such that they may fly away from the nacelle 16. Consequently, such burning parts may fall on a ground in the surroundings of the wind turbine 10, but not on any of its critical parts, thus significantly reducing the risk of igniting a fire in the nacelle 16 or in any other critical components.

In a particularly favorable variant of this example, yawing the nacelle 16 away from the incoming wind direction 28 may comprise yawing by an angle of substantially one hundred and eighty degrees, 180°. In this variant, the rotor 18 may be in a substantially downwind direction. In other words, a rotor disk 181 may be substantially perpendicular with respect to the wind direction 28. The rotor axis 30 of the wind turbine 10 may be aligned with the wind direction 28, but a rear part of the nacelle 16 may be the one facing the wind. Such an arrangement is schematically depicted in Figures 5A-5B. Hence, as shown in these figures, the favorable effect of orienting the wind turbine 10 in a downwind orientation is clearly seen. Indeed, any loosen part from the burning first blade 22f may have an extremely low likelihood of falling on any other part of the wind turbine 10.

As explained with reference to Figure 2, some wind turbines 10 may comprise a pitch system 32 to rotate the first blade 22f about a longitudinal axis of the first blade 22f by a pitch angle. In an example of the disclosure, a method may comprise adjusting the pitch angle of the first blade 22f such that a distance from a tip of the first blade 22f to the nacelle 16 in a wind direction 28, or in a direction parallel to the wind direction 28, is maximum.

The pitch angle may exhibit a certain range and its value may be varied during operation of the wind turbine 10. In particular, the pitch angle may be varied depending on wind conditions. In this example, adjusting the pitch angle of first blade 22f may comprise adjusting the pitch angle such that the first blade 22f is positioned as it would be positioned during normal operation while at low or moderate wind speeds. Such a position may typically correspond to a pitch angle of about zero degrees. Accordingly, in an example of the disclosure, the method may comprise adjusting the pitch angle of the first blade 22f to a pitch angle of about zero degrees.

According to this example, a further beneficial effect may be obtained from a feature present in many wind turbine blades 22. Hence, wind turbine blades 22 may be manufactured with a curvature. In particular, it is known to provide a curvature so that the wind turbine blades 22, when mounted on a hub 20 of a wind turbine rotor 18, do not extend only outwardly from the hub 20 but also forwardly, i.e. in a direction away from the wind turbine tower 15. Such curvature is typically provided in at least an outer third of the length of the wind turbine blade 22.

The pre-bending is designed such that, when taking into account the bending of the blade 22 due to the wind pressure during wind turbine 10 operation, a clearance between the rotating blade 22 and the wind turbine tower 15 is maintained. Such wind pressure or thrust is maximum before active pitching of the blades 22, i.e. while the pitch angle is at about 0°. Consequently, the pre-bending is designed such that blades 22 exhibit a maximum forward extension when the pitch angle is in this range. By arranging the burning first blade 22f with a such a pitch angle, a maximum distance or separation with respect to the other parts of the wind turbine 10, e.g. the nacelle 16, can be achieved.

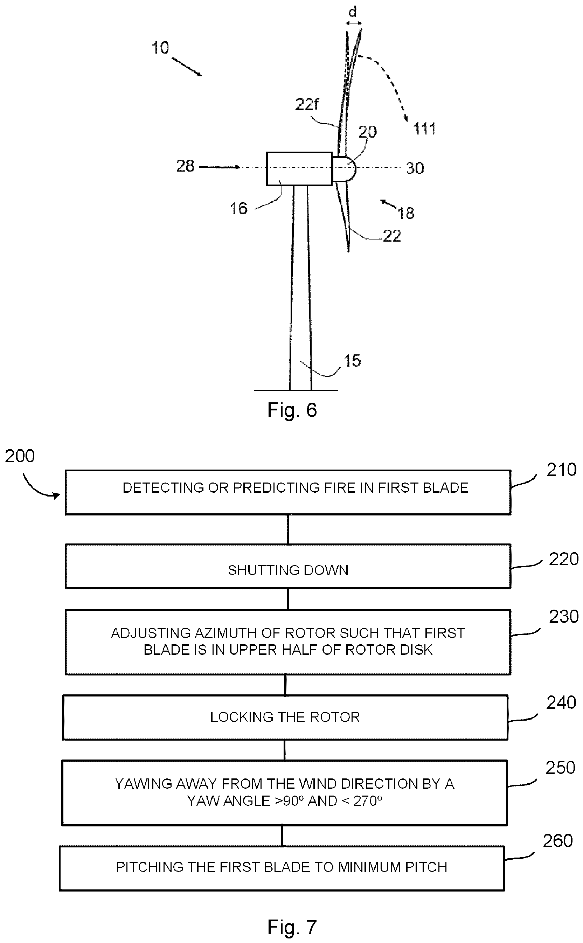

Figure 6 schematically illustrates a side view of a wind turbine 10 comprising wind turbine blades 22 with such pre-bending curvature. The wind turbine 10 in this example may be arranged according to the method 100 already described with reference to Figures 5A-5B. In other words, the azimuth angle of the rotor 18 may be such that the burning first blade 22f is at the 12 o'clock position, and the yaw angle may be controlled such that the wind turbine 10 is in a downwind configuration, i.e. with a deviation of 180° with respect to the wind direction 28.

Figure 6 schematically represents a situation in which the pitch angle of the first blade 22f is set to the pitch value in the range of 0°, i.e. to a pitch value commonly used at low to moderate wind speeds. The selection of the pitch angle and the pre-bending of the first blade 22f result in a maximum separation from the other parts of the wind turbine 10, thus reducing the risk of fire spreading from the first blade 22f to the nacelle 16. The advantage associated with this arrangement of the first blade 22f is illustrated by the distance d in Figure 6. This distance d represents the added separation that may be achieved in this example. The dashed line corresponds to a blade without pre-bending, or to a blade with a different blade pitch angle.

In a variant of a method comprising adjusting the pitch angle of the first blade 22f so as to maximize a distance between the first blade 22f and the nacelle 16 in the wind direction 28, such adjusting may be carried out while yawing the nacelle 16 and the rotor 18 away from an incoming wind direction 28.

According to this variant, a more efficient method may be carried out in which the potential risk of a fire in the nacelle 16 may be further reduced. Specifically, by simultaneously pitching the first blade 22f while the yawing operation takes place, a shorter time may be required for the complete maneuver. Accordingly, an improved reaction may be provided to the presence or prediction of a fire in the first blade 22f.

In an example, the method 100 may comprise shutting down the wind turbine 10 after detecting or predicting the fire in the first blade 22f. In this manner, a safer operation may be carried out. This may be particularly the case when an already active fire is detected in the first blade 22f. However, even in cases in which such a fire is only predicted, shutting down the wind turbine 10 may increase the overall safety of the maneuver, thus mitigating the potential damage of any of the wind turbine components.

It is worth noting that shutting down may apply if the wind turbine 10 is in a power generation mode of operation when the fire in the first blade 22f is detected or predicted. Alternatively, in other cases, the wind turbine 10 may be already in a non-generating mode of operation, e.g. in idling or in parked state, when such a fire is detected or predicted. Accordingly, in those non-operating cases, a shutting down of the wind turbine 10 will not be carried out as part of the current method 100.

A flowchart of an example of a method 200 comprising shutting down the wind turbine 10 and pitching the first blade 22f is schematically presented in Figure 7. Hence, the method 200 comprises, in block 210, detecting or predicting a fire in a first blade 22f of the plurality of blades 22. Furthermore, block 220 of the method 200 comprises shutting down the wind turbine so as to interrupt generation of electrical power. Block 230 may comprise adjusting an azimuth angle ϕ of the rotor 18 about the rotor axis 30 such that the first blade 22f is positioned in an upper half UH of the rotor disk. The method 200 may also comprise, in block 240, fixing the rotor 18 at a predetermined azimuth angle. Block 250 of the method 200 may comprise yawing the nacelle 16 and the rotor 18 away from an incoming wind direction 28 to a yaw angle that is more than ninety degrees, 90°, and less than two hundred and seventy degrees, 270°. Additionally, in this example, the method 200 may also comprise, in block 260, pitching the first blade 22f to an angle corresponding to a minimum pitch.

As also mentioned with respect to the method 100 in Figure 4, the different blocks illustrated in Figure 7 are not to be interpreted as limited to a fixed sequence. As an example, block 250, which comprises yawing of the nacelle 16 and the rotor 18, and block 260, which comprises pitching of the first blade 22f, may be carried out in an inverse order or even simultaneously.

In an example of the disclosure comprising shutting down the wind turbine 10, such shutting down may comprise decelerating the rotor 18. Furthermore, in a variant of such a method, adjusting the azimuth angle of the rotor 18 may comprise controlling a deceleration of the rotor 18 such that the rotor 18 stops at a predetermined azimuth angle.

In order to decelerate the rotor 18 of the wind turbine 10, different actuators may be employed. In particular, a controlled deceleration may be carried out by controlling an electromagnetic torque with a power converter, and/or a pitch angle of the blades 22. Moreover, the deceleration may be controlled by taking into account the speed ω and azimuth angle ϕ of the rotor 18, such that the rotor 18 comes to a complete stop at a certain predetermined azimuth angle. According to this example, a particularly efficient maneuver may be achieved. In particular, no further steps may be needed to position the rotor 18 because both shutting down and adjusting of the azimuth angle may be carried in a single step. Reaction time may be the reduced while minimizing further requirements for the system.

In a variant of this example, the wind turbine 10 may be controlled such that the predetermined azimuth angle corresponds to an azimuth angle wherein the first blade 22f is positioned in an upper half UH of the rotor disk 181. Specifically, the first blade 22f may be positioned in a vertical direction plus or minus forty five degrees, 45°. Even more specifically, the first blade 22f may be positioned in a substantially vertical direction, i.e. in a 12 o'clock position.

As explained with reference to Figures 5A-5B, the positioning of the first blade 22f in an upper half UH of the rotor disk 181 or, even more specifically, the positioning of the first blade 22f at a 12 o'clock position, may exhibit significant benefits in order to reduce the likelihood of a serious fire in the nacelle 16.

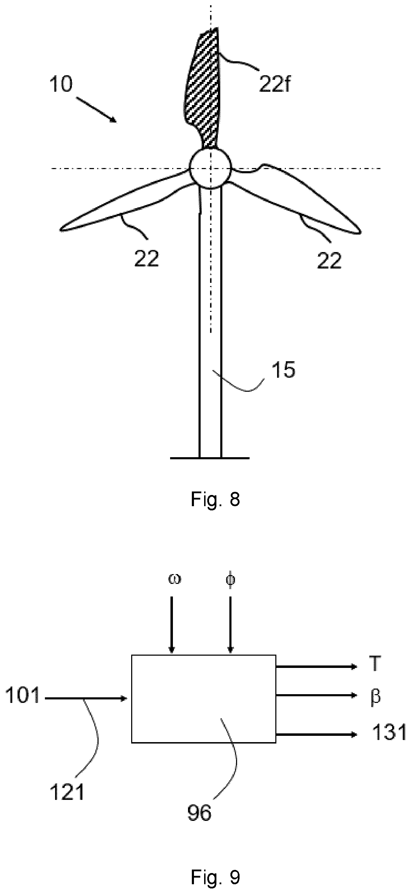

In other examples of the disclosure, the wind turbine 10 may not be actively controlled to achieve a desired predetermined azimuth angle. Hence, in some examples, adjusting the azimuth angle of the rotor 18 may comprise operating the wind turbine 10 in idling mode until an equilibrium position is reached in which the first blade 22f is positioned in a substantially vertical direction, i.e. in a 12 o'clock position. Such an example is illustrated in Figure 8, which schematically illustrates a front view of a wind turbine 10 with a burning first blade 22f.

This example benefits from the imbalance of the rotor 18, which is induced by a reduced weight of the burning first blade 22f. Hence, after detecting or predicting a fire in the first blade 22f, the wind turbine 10 may be operated in idling, i.e. in a no-load mode in which no electrical power is generated and the rotor 18 is allowed to rotate substantially freely. After a certain time, the rotor 18 will passively reach an equilibrium as shown in Figure 8. Indeed, due to the reduced weight of the burning first blade 22f, the rotor 18, which is allowed to rotate freely, will eventually reach a position in which the less heavy first blade 22f is pointing upwards, i.e. at 12 o'clock position. In an example, once this equilibrium position is reached, one may easily fix the rotor 18 with the corresponding fixing system, e.g. with a locking system or with a braking system, which, due to the equilibrium scenario, may not suffer any overloading. In other words, a conventional fixing system may be employed. In this example, a particularly simple and reliable operation may be achieved as no active control of the rotor 18 position may be required. On the contrary, the reaction time may be larger than in some of the previously discussed examples. In particular, a less proactive response may be observed when using a passive adjustment of the azimuth angle of the rotor 18.

This example may be particularly useful in cases wherein the fire in the first blade 22f is detected or predicted while the wind turbine 10 is not generating power. In such cases, active positioning by controlling a deceleration of the rotor 18 may not be possible. In particular, the wind turbine 10 may already be in an idling operating mode when the fire is detected or predicted. Accordingly, a passive method according to the present example may be employed to adjust the azimuth angle.

In an example of the disclosure, the wind turbine 10 may be a geared wind turbine 10 like the one shown in Figure 2. In this example, the wind turbine 10 may comprise a low speed shaft 44 coupled to the rotor 18, a gearbox 46 driven by the low speed shaft 44, a high speed shaft 48 driven by the gearbox 46, and a brake (not shown) configured for braking the high speed shaft 48, e.g. by engaging with a braking disk. In this example, the rotor 18 may be fixed, and fixing the rotor 18 may comprise actuating the brake to brake the high speed shaft 48.

This example of the disclosure may by particularly useful in cases comprising a substantially balanced rotor 18. Hence, a standard brake, i.e. a non-oversized high speed shaft brake, may be employed. No overloading of the brake may be needed as this is already designed to withstand the loads of a balanced rotor 18.

On the other hand, in another example of the disclosure, a method may be applied in a direct-drive wind turbine, i.e. a wind turbine not comprising a gearbox 46 in which the rotor 18 is directly connected to the electrical generator 42. In this example, adjusting the azimuth angle of the rotor 18 may comprise rotating the rotor 18 by using the generator 42 of the wind turbine 10 as a motor. Hence, in this example, an advantage may be taken of the direct connection between the rotor 18 and the electrical generator 42. The generator 42 is an electrical machine, which can be operated as either a generator, during standard mode of operation, or as a motor to actively rotate the rotor 18. In particular, it is already known to operate the generator 42 as a motor to control the azimuth angle of the rotor 18 before fixing for, e.g. maintenance operations. In this example, such capability may be used to ensure the first blade 22f, i.e. the blade 22 with an existing or predicted fire, is positioned with a desired orientation, e.g. at a 12 o'clock position.

Operation of the generator 42 as a motor may be feasible regardless of whether the wind turbine 10 is in a power generation mode or in an idling state when the fire in the first blade 22f is detected or predicted. In cases involving an initial power generation mode, the wind turbine 10 may be first shut down and the rotor 18 may be stopped without actively controlling its stopping position. This may simplify the shutdown maneuver. Subsequently, once the rotor 18 is stopped, the generator 42 may be motorized to rotate the rotor 18 slowly until the desired position of the first blade 22f is reached. Once the desired position is reached, the rotor 18 can be stopped again. Subsequentially, in an example, the rotor 18 may be fixed to prevent further undesired rotational movement.

Different strategies may be used for detecting and predicting the occurrence of a fire in a first blade 22f. Hence, in examples of the disclosure, detecting or predicting the fire in the first blade 22f may comprise at least one of the following: measuring a temperature and detecting a temperature value exceeding a predetermined threshold; measuring a temperature over a time period and identifying a temperature positive gradient exceeding a predetermined threshold; detecting a presence of smoke in the first blade 22f; and detecting a presence of a flame. In still other examples, an image capturing system, such as a camera, may be used to detect the presence of a fire in the first blade 22f.

A temperature sensor may be a particularly cost-effective, reliable, and easy way to monitor the state of a first blade 22f. The temperature sensor may be arranged in the first blade 22f itself. Furthermore, a plurality of temperature sensors, which may allow a more precise and early detection or prediction of a fire, may be distributed at different positions of the first blade 22f. In some examples, the mere detection of a very high temperature, i.e. a temperature exceeding a predetermined threshold, may be enough to detect or predict a fire. Instead, in other cases, an evolution of the temperature over a certain time period may be used as an indicator. Hence, a very high gradient, which may exceed a predetermined thresholds, may be indicative of an abnormal situation in the first blade 22f. Specifically, a pronounced temperature increase in a short period of time may also be used as an indicator of an existing fire or, at least, as a proxy to predict a fire in the first blade 22f.

Apart from temperature sensors, other known sensors may be used to detect an already existing fire. For instance, a smoke sensor may be used to directly detect the presence of a fire. Similarly, a flame detector may also be indicative of an already existing fire in the first blade 22f. As with the temperature sensors, the smoke or the flame detectors may be arranged in the first blade 22f.

In still other examples, a camera or other image acquisition equipment, including infrared cameras, may be used to detect abnormally high temperature or to capture images of an interior of the first blade 22f. Such images may also be used to detect or predict a fire. Specifically, an automatic image identification system may be employed to automatically detect the presence of a fire. The camera or image acquisition equipment may be positioned in the first blade 22f or in another location such as on the nacelle 16 or on the hub 20. Machine vision may be used automatically detect or predict a fire in the first blade 22f.

In a further example, actions arising from a detection or prediction of a fire may go beyond the risk mitigations maneuvers described above. Hence, in some examples, the method may also comprise generating an alarm signal after detecting or predicting the fire in the first blade 22f. The method may also comprise sending the alarm signal to a remote control center. According to this example, appropriate actions may be taken, e.g. by maintenance personnel, to mitigate the effects of a fire in a wind turbine 10.

In another aspect of the disclosure, a control unit 96 for a wind turbine 10 is provided. The wind turbine 10 comprises a rotor 18 including a plurality of blades 22. The rotor 18 is configured for rotating about a rotor axis 30 and a rotor disk 181 is defined by a circular area swept by the blades 22. The wind turbine 10 also comprises a nacelle 16, a tower 15, and a yaw system 56 for yawing the nacelle 16 and the rotor 18 about a longitudinal axis of the tower 15. The control unit is configured for determining or predicting an occurrence of a fire in the first blade 22f based on the received signal. Besides, the control unit 96 is configured for sending instructions to one or more actuators of the wind turbine 10 so as to adjust an azimuth angle of the rotor 18 about the rotor axis 30 such that the first blade 22f is positioned in an upper half UH of the rotor 18. The control unit 96 is further configured for sending instructions to the yaw system 56 to yaw the rotor 18 away from an incoming wind direction 28 to a yaw angle of more than ninety degrees, 90°, and less than two hundred and seventy degrees, 270°. In some examples, the control unit 96 may be further configured for sending instructions to a fixing system, e.g. to a locking or braking system, to fix the rotor 18 so as to prevent undesired movements after adjustment of the rotor 18.

According to this aspect of the disclosure, a control unit 96 capable of minimizing the risk of a catastrophic fire in a wind turbine 10 is provided. In particular, the control unit 96 may be configured to implement any of the previously described methods 100, 200. As a result, the potential damage caused by a fire in a first blade 22f can be contained to such first blade 22f while the components of the nacelle 16 may remain substantially unaffected.

Figure 9 schematically illustrates a control unit 96 for a wind turbine 10 according to an example. In some variants, the control unit 96 may be the same as the wind turbine controller 36. In other examples, the control unit 96 may be independent from the wind turbine controller 36. As shown in Figure 9, in an example, the control unit 96 may be configured for receiving signals 121 from one or more sensors 101. The sensors 101 may be located in the corresponding wind turbine blades 22. Alternatively, the sensors 101 may be arranged in other locations such as on the hub 20 or on the nacelle 16. Furthermore, the wind turbine 10 may also comprise a speed sensor configured for detecting a rotational speed ω of the rotor 18 and/or a position sensor configured for detecting an azimuth angle ϕ of the rotor 18. As shown in Figure 9, such variables may also be fed to the control unit 96.

The control unit 96 may be configured for controlling a torque actuator to control a torque T applied to the rotor 18 and for controlling a pitch actuator to control a pitch angle β of the blades 22 of the rotor 18. Such control may be dependent on receiving a signal 121 indicative of a fire, either already existing or predicted, in a first blade 22f.

Furthermore, in some examples of the disclosure, a closed loop controller may be implemented in the control unit 96. Accordingly, the torque T and the pitch angle β may be adjusted such that the rotor speed ω and/or the rotor azimuth angle ϕ are controlled. In this manner, a controlled deceleration of the rotor 18, which may allow the rotor 18 to stop at a certain predetermined position, may be provided.

Moreover, as also schematically illustrated in Figure 9, upon receiving a signal 121 indicative of a fire in a first blade 22f, the control unit 96 may also be configured to generate an alarm signal 131. The alarm signal 131 may be subsequently sent to a remote control center.

In still a further aspect of the disclosure, a wind turbine 10 is provided. The wind turbine 10 comprises one or more sensors 101 for detecting a condition indicative of a fire or a potential fire in a first blade 22f. The sensors 101 may be arranged in the first blade 22f or in other locations, e.g. on the hub 20 or on the nacelle 16. The wind turbine 10 also comprises a control unit 96 like the one described above. The control unit 96 is configured for receiving a signal from the sensors 101. The received signal or signals are used by the control unit 96 top determine or predict an occurrence of a fire in the first blade 22f.

A wind turbine 10 with a reduced risk of potentially catastrophic damage of the nacelle 16 may be obtained. Furthermore, different types of sensors 101 may be employed to detect a condition indicative of a fire in the first blade 22f. In particular, the sensors 101 may comprise at least one of the following: a smoke sensor, a temperature sensor, and a visual sensor. A suite of sensors 101 may be mounted in each of the blades 22 of the rotor 18. In some cases, sensors 101 may provide a direct indication of a fire, e.g. when using a smoke sensor or a camera. In other cases, sensors 101 may be used to provide an indirect indication of a fire and/or to predict the occurrence of such a fire. This may be the case when using, e.g. temperature sensors. Furthermore, in some examples, some sensors 101 may also be mounted in locations other than the first blade 22f such as on the hub 20 or on the nacelle 16. This may be particularly the case if using cameras or other image acquisition device.

Different types of wind turbines 10 may benefit from the present disclosure. Hence, in an example, the wind turbine 10 may be a direct-drive wind turbine 10. Furthermore, in such case, a main generator 42 of the wind turbine 10 may be configured to operate as a motor and to receive instructions from the control unit 96 so as to adjust an azimuth angle of the rotor 18 about the rotor axis 30.

In other examples, the wind turbine 10 may comprise a geared wind turbine 10 comprising a low speed shaft 44 coupled to the rotor 18, a gearbox 46 driven by the low speed shaft 44, a high speed shaft 48 driven by the gearbox 46, and a brake configured for braking the high speed shaft 48. In these examples, the brake may be configured for receiving instructions from the control unit 96 to fix the rotor 18.

This written description uses examples to disclose a teaching, including the preferred embodiments, and also to enable any person skilled in the art to put the teaching into practice, including making and using any devices or systems and performing any incorporated methods. The patentable scope is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims. Aspects from the various embodiments described, as well as other known equivalents for each such aspects, can be mixed and matched by one of ordinary skill in the art to construct additional embodiments and techniques in accordance with principles of this application. If reference signs related to drawings are placed in parentheses in a claim, they are solely for attempting to increase the intelligibility of the claim, and shall not be construed as limiting the scope of the claim.

## Claims

1. A method (100) for operating a wind turbine (10), the wind turbine (10) comprising:
a rotor (18) including a plurality of blades (22), the rotor (18) being configured for rotating about a rotor axis (30), and a rotor disk (181) being defined by a circular area swept by the blades (22);
a nacelle (16);
a tower (15); and
a yaw system (56) for yawing the nacelle (16) and the rotor (18) about a longitudinal axis of the tower (15);
the method (100) comprising:
detecting or predicting a fire in a first blade (22f) of the plurality of blades (22);
adjusting an azimuth angle of the rotor (18) about the rotor axis (30) such that the first blade (22f) is positioned in an upper half of the rotor disk (181); and
yawing the nacelle (16) and the rotor (18) away from an incoming wind direction (28) to a yaw angle of more than 90 degrees and less than 270 degrees.

2. The method of claim 1, further comprising fixing the rotor at a predetermined azimuth angle.

3. The method of claim 1 or 2, wherein adjusting the azimuth angle of the rotor (18) comprises adjusting the azimuth angle such that the first blade (22f) is positioned in a vertical direction plus or minus 45 degrees.

4. The method of claim 3, wherein the first blade (22f) is positioned in a substantially vertical direction.

5. The method of any previous claim, wherein yawing the nacelle (16) away from the incoming wind direction (28) comprises yawing the nacelle (16) and the rotor (18) by an angle in a range from 135 degrees to 225 degrees.

6. The method of claim 5, wherein yawing the nacelle (16) away from the incoming wind direction (28) comprises yawing the nacelle (16) and the rotor (18) by an angle of substantially 180 such that the rotor (18) is in a substantially downwind direction.

7. The method of any previous claim, wherein the wind turbine (10) comprises a pitch system (32) to rotate the first blade (22f) about a longitudinal axis of the first blade (22f) by a pitch angle, the method comprising adjusting the pitch angle of the first blade (22f) such that a distance from a tip of the first blade (22f) to the nacelle (16) in a wind direction (28) or in a direction parallel to the wind direction (28) is maximum.

8. The method of any previous claim, comprising shutting down the wind turbine (10) after detecting or predicting the fire in the first blade (22f).

9. The method of claim 8, wherein shutting down the wind turbine (10) comprises decelerating the rotor (18), and further wherein adjusting the azimuth angle of the rotor (18) comprises controlling a deceleration of the rotor (18) such that the rotor (18) stops at a predetermined azimuth angle, the predetermined azimuth angle corresponding to an azimuth angle wherein the first blade (22f) is positioned in an upper half of the rotor disk (181), specifically wherein the first blade (22f) is positioned in a vertical direction plus or minus forty five degrees, more specifically wherein the first blade (22f) is positioned in a substantially vertical direction.

10. The method of any of claims 1 to 8, wherein adjusting the azimuth angle of the rotor (18) comprises operating the wind turbine (10) in idling mode until the rotor (18) reaches an equilibrium position in which the first blade (22f) is positioned in a substantially vertical direction.

11. The method of any previous claim, wherein detecting or predicting the fire in the first blade (22f) comprises at least one of the following: measuring a temperature and detecting a temperature value exceeding a predetermined threshold; measuring a temperature over a time period and identifying a temperature positive gradient exceeding a predetermined threshold; detecting a presence of smoke in the first blade (22f); and detecting a presence of a flame.

12. A control unit (96) for a wind turbine (10), the wind turbine (10) comprising:
a rotor (18) including a plurality of blades (22), the rotor (18) being configured for rotating about a rotor axis (30), and a rotor disk (181) being defined by a circular area swept by the blades (22);
a nacelle (16);
a tower (15); and
a yaw system (56) for yawing the nacelle (16) and the rotor (18) about a longitudinal axis of the tower (15);
the control unit (96) being configured for:
determining or predicting an occurrence of a fire in the first blade (22f);
sending instructions to one or more actuators of the wind turbine (10) so as to adjust an azimuth angle of the rotor (18) about the rotor axis (30) such that the first blade (22f) is positioned in an upper half of the rotor disk (181); and
sending instructions to the yaw system (56) to yaw the rotor (18) away from an incoming wind direction (28) to a yaw angle of more than 90 degrees and less than 270 degrees.

13. A wind turbine (10) comprising:
one or more sensors (101) for detecting a condition indicative of fire or a potential fire in a first blade (22f) of a plurality of blades (22), and
a control unit (96) according to claim 12 and configured for receiving signals from the sensors (101).

14. The wind turbine (10) of any of claims 12 or 13, wherein the wind turbine (10) is a direct-drive wind turbine (10) and a main generator (42) of the wind turbine (10) is configured to operate as a motor and to receive instructions from the control unit (96) so as to adjust an azimuth angle of the rotor (18) about the rotor axis (30).

15. The wind turbine (10) of any of claims 12 or 13, wherein the wind turbine (10) is a geared wind turbine (10), the wind turbine (10) comprising a low speed shaft (44) coupled to the rotor (18), a gearbox (46) driven by the low speed shaft (44), a high speed shaft (48) driven by the gearbox (46), and a brake configured for braking the high speed shaft (48), and further wherein the brake is configured for receiving instructions from the control unit (96) to fix the rotor (18).
